# EUROPÄISCHE PATENTSCHRIFT

(11) **EP 1 768 380 B1**
(45) Veröffentlichungstag und Bekanntmachung des Hinweises auf die Patenterteilung: **16.05.2012**
(21) Anmeldenummer: 06019688.8
(22) Anmeldetag: 20.09.2006
(51) Int. Cl.: H04N 1/60, G01J 3/51, G01J 3/46, G01J 3/10

(54) **Farbdichtemessgerät**
Densitometer
Densitomètre

(30) Priorität: 22.09.2005 DE 102005045357
(43) Veröffentlichungstag der Anmeldung: 28.03.2007
(73) Patentinhaber: Theta System Elektronik GmbH, 82194 Gröbenzell (DE)
(72) Erfinder: Tatarczyk, Christina, 82194 Gröbenzell (DE); Tatarczyk, Joachim, 82194 Gröbenzell (DE)
(74) Vertreter: Fischer, Ernst

(56) Entgegenhaltungen:
- EP-A2- 1 260 877
- DE-A1- 19 939 154
- US-A- 5 751 429
- US-A- 5 856 876
- US-A1- 2005 133 693

## Beschreibung

### Hintergrund der Erfindung

Die Erfindung betrifft ein Farbdichtemessgerät zum Bestimmen der Farbdichte von einer auf einem Bedruckstoff bzw. Sujet aufgebrachten Farbschicht, wobei das Farbdichtemessgerät eine Lichtquelle zum Beleuchten des Bedruckstoffes und einen Sensor zum Empfangen des vom Bedruckstoff remittierten Lichts aufweist. Ferner betrifft die Erfindung die Verwendung eines derartigen Farbdichtemessgeräts an einer Druckvorrichtung für Mehrfarbendruck. Darüber hinaus betrifft die Erfindung auch ein Verfahren zum Bestimmen der Farbdichte mindestens einer der drei Farben Cyan, Magenta oder Yellow oder Schwarz an einem farbigen Stoff.

Insbesondere zum Steuern der Farbführung bei Druckwerken für Mehrfarbendruck ist es üblich die Farbdichte von einer auf den Druckstoff aufgebrachten Farbschicht zu bestimmen. Dazu wird derzeit mit so genannten Farbauflichtdensitometern gearbeitet. Diese Art der Messung basiert auf einer Linearität zwischen gedruckter Farbmenge und optischer Dichte. Die Dichtemessung erfolgt nach dem bekannten Prinzip der Remissionsmessung von Körperfarben. Ein ausgesendeter Messlichtstrahl durchdringt die Farbschicht und wird an der Grenzfläche zwischen Farbschicht und Bedruckstoff reflektiert. Das reflektierte Licht durchdringt die Farbschicht nochmals und wird von einem Photoelement des Farbauflichtdensitometers empfangen. Beim zweifachen Durchdringen der Farbschicht wird das ursprünglich weiße Messlicht durch Absorption gefärbt und geschwächt. Die Remission des Lichts verringert sich in einem typischen Wellenlängenbereich. Am Photoelement wird ein zur Lichtstärke proportionales elektrisches Signal erzeugt. Dieses elektrische Signal enthält die sich vom modulierten reflektierten Licht ergebende Information über Art und Menge der gedruckten Farbe, die zur Bestimmung des Dichtewerts gebraucht wird.

Es sind Densitometer mit sogenannten Statusfiltern bzw. Farbfiltern bekannt, mit denen die Druckfarben Cyan, Magenta, Yellow und auch Schwarz getrennt erfasst werden können. Bei diesen Densitometern sind hinter insgesamt vier einzelnen Filtern mit jeweils unterschiedlichen Transmissionsbereichen einzelne Photoelemente für weißes Licht angeordnet. Die Photozellen bilden einzelne Messkanäle für jede der Druckfarben Cyan, Magenta und Yellow. Die Dichte dieser Buntfarben wird jeweils im niedrigen Remissionsbereich bestimmt, weil hier ausgeprägte gut messbare Veränderungen der Remission stattfinden. Die Dichte von Cyan wird daher mit einem Rotfilter bei einer Wellenlänge von ca. 600 nm gemessen. Analog wird Magenta mit einem Grünfilter bei ca. 530 nm und Yellow mit einem Blaufilter bei ca. 430 nm gemessen. Beispiele für Farbmessgeräte sind aus der EP 1 260 877 A2 und DE 1993 9 154 A1 bekannt.

Die Charakteristik der Filter ist in den Normen DIN 16 536-2 und ISO 5-3 festgelegt. In Europa werden Filter nach Status DIN E verwendet. In den USA und zum Teil in England sind mit Rücksicht auf den SWOP Farbenstandard ISO T Filter gebräuchlich.

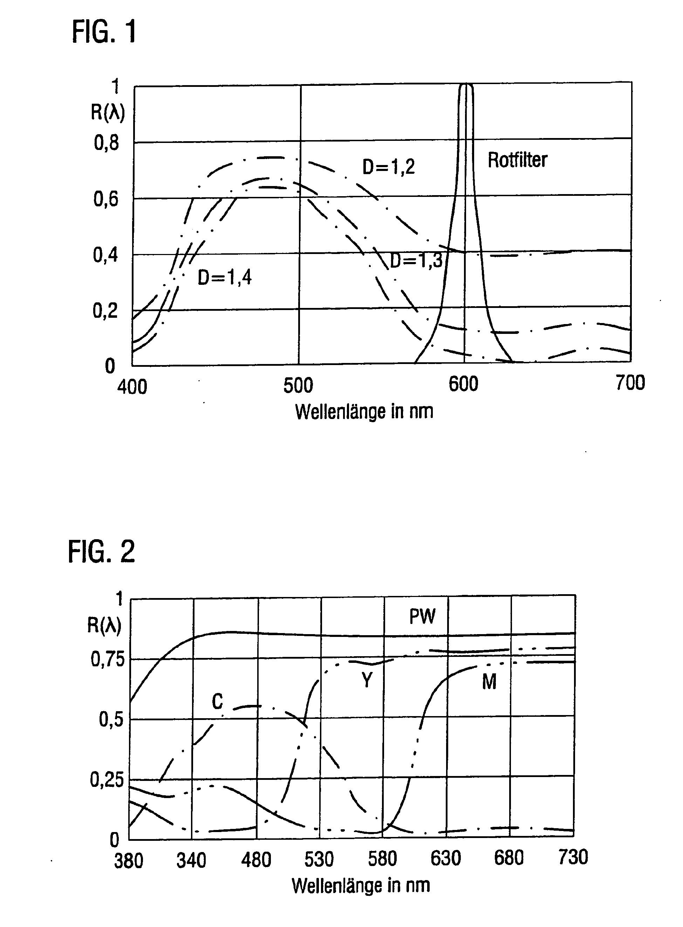

In Fig. 1 ist dieses Vorgehen am Beispiel von Remissionskurven von Cyan für verschiedene Farbdichten veranschaulicht. Die Dichte wird mit einem Rotfilter (Transmissionsbereich bei einer Wellenlänge von ca. 600 nm) im Bereich der größten Veränderungen gemessen.

### Zugrundeliegende Aufgabe

Es ist eine Aufgabe der Erfindung ein Farbdichtemessgerät zum Bestimmen der Farbdichte und dessen Verwendung sowie ein Verfahren zum Bestimmen der Farbdichte anzugeben, welche im Vergleich zu bekannten Messgeräten und Verfahren zu einer erheblichen Kostenreduzierung führen.

### Erfindungsgemäße Lösung

Diese Aufgabe ist erfindungsgemäß mit einem Farbdichtemessgeräte gemäß Anspruch 1, dessen Verwendung gemäß Anspruch 16 und einem Verfahren gemäß Anspruch 17 gelöst. Vorteilhafte Weiterbildungen der Erfindung sind in den abhängigen Ansprüchen beschrieben.

Die Erfindung sieht vor, dass der Sensor eines Farbdichtemessgeräts als ein Mehrfarben-Bildsensor gestaltet ist, welcher auf den Bedruckstoff gerichtet ist. Erfindungsgemäß ist ferner eine Einrichtung vorgesehen, mit der das an dem Mehrfarben-Bildsensor eintreffende Licht auf mindestens ein vorbestimmtes Wellenlängenband beschränkt ist. Bei dem erfindungsgemäßen Verfahren zum Bestimmen der Farbdichte mindestens einer der Farben Cyan, Magenta oder Yellow an einem farbigen Stoff, wird dieser Stoff mit Licht beleuchtet und eine bildhafte Aufnahme des vom Stoff remittierte Lichts mit einem Mehrfarben-Bildsensor hergestellt. Dabei ist das an dem Mehrfarben-Bildsensor eintreffende Licht auf mindestens ein vorbestimmtes Wellenlängenband beschränkt. Die Farbdichte wird erfindungsgemäß durch Auswerten der mit dem Mehrfarben-Bildsensor hergestellten bildhaften Aufnahme unter Berücksichtigung der ermittelten Lichtintensität an mindestens einem der Bildpunkte bzw. Pixel des Mehrfarben-Bildsensors ermittelt.

Unter dem erfindungsgemäßen Mehrfarben-Bildsensor wird ein für Licht sensitiver Sensor verstanden, der eine Vielzahl von einzelnen Sensorpunkten für diese unterschiedliche Farben, insbesondere für die Farben rot, grün und blau, aufweist.

Die einzelnen Sensorpunkte weisen dabei eine unterschiedliche relative spektrale Sensitivität auf. Insbesondere hat die Sensitivität für blaues Licht ein Maximum bei einer Wellenlänge von ca. 460 nm, die Sensitivität für grünes Licht ein Maximum bei einer Wellenlänge von ca. 520 bis 530 nm und die Sensitivität der Sensorpunkte für rotes Licht ein Maximum bei etwa 620 bis 640 nm. Derartige Bildsensoren können besonders kostengünstig bezogen werden, weil sie beispielsweise bei CCD Kameras heutzutage bereits in vergleichsweise hoher Stückzahl zur Anwendung kommen. Erfindungsgemäß wird der Mehrfarben-Bildsensor mit einer herkömmlichen Mehrfarben-Kamera, insbesondere einer Rot-Grün-Blau-Kamera gebildet.

Die Erfindung ermöglicht es bei einer Farbdichtemessung mit einem besonders kostengünstigen Mehrfarben-Bildsensor zu arbeiten, der aufgrund der an ihm vorgesehen Vielzahl von Bildpunkten bzw. Sensorpunkten auch eine Vielzahl einzelner Messpunkte bei der einzelnen Farbdichtemessung liefert. Erfindungsgemäß ist dabei das an den einzelnen Sensorpunkten des Mehrfarben-Bildsensors jeweils eintreffende Licht auf mindestens ein vorbestimmtes Wellenlängenband beschränkt. Diese Beschränkung erfolgt bevorzugt mittels einer Filtereinrichtung, die insbesondere im Strahlengang des emittierten Lichts vor den Mehrfarben-Bildsensor geschaltet ist. Dadurch wird den einzelnen Bildpunkten des Mehrfarben-Bildsensors nur ein Teilbereich ihrer Wellenlängenspektren durch die vorgesehene Filtereinrichtung zugeleitet. So erhält beispielsweise der einzelne für Rotlicht vorgesehene Rot-Sensorpunkt nur jenen Teilbereich des Wellenlängenspektrums von rotem Licht, der für eine Farbdichtemessung bei einer Remissionskurve von Cyan erforderlich ist.

Die restlichen Sensorpunkte des Mehrfarben-Bildsensors können gegebenenfalls zur Messung der Farbbalance und von Nebendichten genutzt werden.

Durch insbesondere wahlweises Vorsehen von Filtereinrichtungen mit verschiedenen Transmissionsbereichen, können die einzelnen Sensorpunkte des Mehrfarben-Bildsensors mit entsprechenden Teilbereichen der zugehörigen Wellenlängenspektren derart angesprochen werden, dass analog zur erläuterten Farbdichtemessung von Cyan auch Farbdichtemessungen von Yellow und/oder Magenta möglich sind.

Dazu ist eine Beschränkung, bevorzugt in Form einer Filtereinrichtung mit zumindest einem zweiten Transmissionsbereich vorgesehen, mit der das eintreffende Licht auf einen Teilbereich des Wellenlängenspektrums von einer zweiten Farbe der Farben des Mehrfarben-Bildsensors, der drei Farben Rot, Grün oder Blau beschränkt ist.

Die beschränkende Einrichtung weist ferner auch einen dritten Transmissionsbereich auf, mit dem das eintreffende Licht auf einen Teilbereich des Wellenlängenspektrums von einer dritten Farbe des Mahrfarben-Bildsensors, der drei Farben Rot, Grün oder Blau beschränkt ist.

Mit derartigen Einrichtungen und insbesondere Filtereinrichtungen ist es möglich, zugleich Farbdichtemessungen von mindestens und insbesondere drei verschiedenen Farben, vorliegend der Buntfarben Cyan, Magenta und Yellow gleichzeitig und innerhalb einer auch größeren bildhaften Aufnahme zu messen. Den einzelnen Sensorpunkten für rotes, grünes und blaues Licht wird mit der Filtereinrichtung jeweils ein Teilbereich des zugehörigen Wellenlängenspektrums zugewiesen. Die nicht zum Sensitivitätsbereich der einzelnen Sensorpunkte passenden Transmissionsbereiche der Filtereinrichtung lassen hingegen Licht aus Wellenlängenbereichen durch, für welches diese "nicht passenden" Sensorpunkte nicht bzw. kaum sensitiv sind.

Die oben genannten Teilbereiche, insbesondere die Transmissionsbereiche der Filtereinrichtung, sind auf einen Bereich zwischen ca. 420 nm und ca. 460 nm, insbesondere zwischen 430 nm und ca. 450 nm beschränkt sein. Mit einem derartigen Transmissionsbereich kann die Sensitivität eines für blaues Licht sensitiven Sensorpunktes derart beschränkt werden, dass dieser als Dichtemesseinrichtung bzw. Densitometer für die Buntfarbe Yellow wirkt.

Ein weiterer Teilbereich des erfindungsgemäß beschränkten Lichts ist der Bereich zwischen ca. 510 nm und ca. 550 nm, insbesondere zwischen ca. 520 nm und ca. 540 nm. Mit einem derartigen Teilbereich kann die Sensitivität eines für grünes Licht sensitiven Sensorpunktes auf einen Wellenlängenbereich beschränkt werden, dass dieser als Dichtemesseinrichtung für die Buntfarbe Magenta wirkt.

Als dritter Teilbereich ist schließlich jener zwischen ca. 610 nm und ca. 650 nm, insbesondere zwischen ca. 620 nm und ca. 640 nm zu wählen. Mit diesem Teilbereich kann man die Sensitivität eines grundsätzlich für rotes Licht empfindlichen Sensorpunktes so auf einen Wellenlängenbereich beschränken, dass dieser wie auch an dem Beispiel in der Einführung erläutert als Dichtemesseinrichtung für die Buntfarbe Cyan wirkt.

Alternativ oder zusätzlich zu diesen Teilbereichen ist erfindungsgemäß bevorzugt eine Einrichtung vorgesehen, mittels der das an dem Mehrfarben-Bildsensor eintreffende Licht auf einen Teilbereich des Wellenlängenspektrums von infrarotem Licht beschränkt ist. Dieser Weiterbildung liegt die Erkenntnis zugrunde, dass bunte Druckfarben für infrarotes Licht transparent sind, wohingegen die auf Kohlenstoff basierenden schwarzen Druckfarben Infrarotlicht remittieren. Ferner sind die Bildpunkte von Mehrfarben-Bildsensoren auch im infraroten Bereich sensitiv. Mit der erfindungsgemäß vorgesehenen Beschränkung des eintreffenden Lichts auf Infrarotlicht kann daher nahezu ohne Zusatzaufwand die Dichte der Druckfarbe schwarz auch unabhängig von den Bundfarben ermittelt werden. Besonders vorteilhaft ist dabei, dass auch diese Messung wegen der erfindungsgemäßen bildhaften Aufnahme über einen großen Bild- bzw. Sujetbereich hinweg gemacht werden kann.

Um die oben genannten Transmissionsbereiche in einer einzelnen Filtereinrichtung kostengünstig bereitstellen zu können, ist es erfindungsgemäß bevorzugt vorgesehen, hierfür einen Mehrfachband-Filter, insbesondere einen so genannten Trippelfilter zu verwenden, wie er herkömmlich für Multi-Fluoreszenz-Messungen verwendet wird. Derartige Mehrfachbanden-Filter sind ebenfalls sehr kostengünstig zu beschaffen.

Neben einer Beschränkung des auf den Mehrfarben-Bildsensor eintreffenden Lichts mittels Filterung kann alternativ oder zusätzlich auch das von der Lichtquelle ausgesendete Licht hinsichtlich seiner Wellenlänge bereits auf ein oder mehrere vorbestimmte Wellenlängenbänder beschränkt sein. Eine derartige auf bestimmte Wellenlängenbänder beschränkte Beleuchtung kann besonders vorteilhaft mittels mehreren Leuchtdioden oder Lasern bereitgestellt werden.

Mit dem erfindungsgemäßen Farbdichtemessgerät, dessen Verwendung sowie dem erfindungsgemäßen Verfahren ist es wie erwähnt möglich, Farbdichtemessungen in einer bildhaften Aufnahme zu machen. Innerhalb der Aufnahme können mit den einzelnen Sensorpunkten bzw. Bildelementen des erfindungsgemäß verwendeten Mehrfarben-Bildsensors jeweils einzelne Messungen an verschiedenen Bildbereichen innerhalb der bildhaften Aufnahme gemacht werden. Diese einzelnen Messungen können dann in Relation zu einander gesetzt werden, was erfindungsgemäß mit Hilfe einer entsprechenden Auswertesoftware geschieht. Ferner ist es erfindungsgemäß möglich, gleichzeitig eine Messung für alle drei Grundfarben Cyan, Magenta und Yellow durchzuführen. Dies senkt erheblich den für die Messungen erforderlichen Zeitaufwand. Der Zeitaufwand reduziert sich aber auch deshalb, weil wegen der vergleichsweise großen bildhaften Aufnahme ein ansonsten notwendiges Bewegen des Bildsensors zu mehreren Messbereichen unterbleiben kann.

Mit der erfindungsgemäßen bildhaften Aufnahme ist es ferner möglich einen Vergleich zwischen einer farbigen und einer weißen Oberfläche vorzunehmen. Dabei muss die Bildaufnahme lediglich an einem Bildbereich gemacht werden, an dem ein solcher farbiger und auch weißer Bildabschnitt vorhanden sind. Mit der Messung am weißen Bildabschnitt kann dann beispielsweise auch die Qualität des Druckpapiers selbst beurteilt werden.

### Kurzbeschreibung der Zeichnungen:

Nachfolgen werden Ausführungsbeispiele eines erfindungsgemäßen Farbdichtemessgeräts anhand der beigefügten schematischen Zeichnungen näher erläutert. Es zeigt:
- Fig. 1: eine grafische Darstellung von Remissionskurven von Cyan für ver-schiedene Farbdichten sowie der zugehörigen Dichtemessung mit Hilfe eines Rotfilters,
- Fig. 2: eine grafische Darstellung der spektralen Remissionskurven der Buntfarben Cyan, Magenta und Yellow und des unbedruckten weißen Papiers,
- Fig. 3: eine grafische Darstellung der typischen normierten Sensitivität einer Mehrfarben-Kamera, vorliegend einer Rot-Grün-Blau-Kamera,
- Fig. 4: eine grafische Darstellung der Transmission eines erfindungsgemäßen Dreifachbanden-Filters,
- Fig. 5: eine stark vereinfachte perspektivische Ansicht eines ersten Ausführungsbeispiels eines erfindungsgemäßen Farbdichtemessgeräts,
- Fig. 6: eine grafische Darstellung der normierten Sensitivität der erfindungsgemäß verwendeten Mehrfarben-Kamera mit dem erfindungsgemäßen Dreifachbanden-Filter,
- Fig. 7: eine stark vereinfachte Seitenansicht eines zweiten Ausführungsbeispiels eines erfindungsgemäßen Farbdichtemessgeräts,
- Fig. 8: eine stark vereinfachte Seitenansicht eines dritten zweiten Ausführungsbeispiels eines erfindungsgemäßen Farbdichtemessgeräts,
- Fig. 9: eine stark vereinfachte Seitenansicht eines vierten Ausführungsbeispiels eines erfindungsgemäßen Farbdichtemessgeräts und
- Fig. 10: eine stark vereinfachte Seitenansicht eines fünften Ausführungsbeispiels eines erfindungsgemäßen Farbdichtemessgeräts.

### Detaillierte Beschreibung der Ausführungsbeispiele

In Fig. 2 sind die spektralen Remissionskurven der Druckfarben Cyan (C), Magenta (M) und Yellow (Y) und eines unbedruckten weißen Papiers (PW) grafisch veranschaulicht. Die Kurven zeigen für weißes Papier eine nahezu gleichmäßig hohe Remission von über ca. 0,8 im gesamten Wellenlängenbereich über ca. 430 nm. Im Gegensatz dazu weisen die spektralen Remissionskurven der Buntfarben Cyan, Magenta oder Yellow über den veranschaulichten Wellenlängenbereich hinweg ansteigende und auch abfallende Abschnitte auf. Um bei der sich derart darstellenden Remission der Druckfarben jeweils Dichtemessungen mit hoher Aussagekraft bereitzustellen, werden die Dichtemessungen, wie bereits eingangs erläutert, jeweils im niedrigen Remissionsbereich der Buntfarben vorgenommen. Die Messungen werden also gezielt in vergleichsweise begrenzten Wellenlängenbereichen der spektralen Remissionskurven gemacht. Bei herkömmlichen Dichtemessungen wird dazu, wie in Fig. 1 veranschaulicht, vor ein für weißes Licht sensitives Photoelement ein einzelner Rotfilter geschaltet, welcher von den Remissionskurven von Cyan jeweils nur einen Wellenlängenabschnitt um ca. 600 nm herum für das Photoelement herausfiltert. Je nach Farbdichte ergeben sich für das Photoelement entsprechend starke Abweichungen in der Lichtintensität.

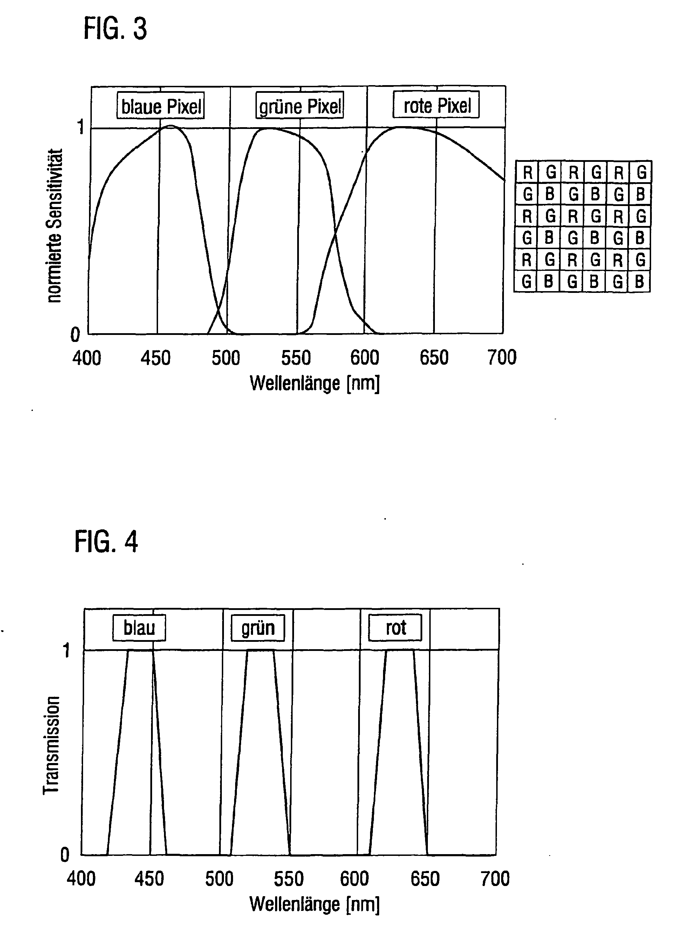

Erfindungsgemäß wird demgegenüber die Verwendung einer herkömmlichen Mehrfarben-Kamera, insbesondere einer Rot-Grün-Blau-Kamera vorgeschlagen, welche auf einem flächigen Bildsensor eine Vielzahl Sensorpunkte für unterschiedliche Farben, vorliegend eine Vielzahl blauer, grüner und roter Sensorpunkte bzw. Pixel umfasst. Eine grafische Detaildarstellung im rechten Bereich der Fig. 3 zeigt die flächige Anordnung derartiger blauer (B), grüner (G) und roter (R) Pixel bzw. Sensorpunkte an einer solchen Farbkamera. Ferner ist im linken Bereich der Fig. 3 die typische Sensitivität der einzelnen Pixel anhand ihrer normierten Sensitivität veranschaulicht.

Aus Fig. 3 ist deutlich zu erkennen, dass die blauen Pixel ein Sensitivitätsmaximum bei ca. 460 nm, die grünen Pixel ein Sensitivitätsmaximum bei ca. 520 nm bis 540 nm und die roten Pixel ein Sensitivitätsmaximum bei ca. 620 bis 630 nm haben. Die derartigen Pixel sind bevorzugt aus Silizium hergestellt und wirken dadurch als einzelne lichtsensitive Elemente, deren Sensorsignal entsprechend auch einzeln ausgewertet werden kann.

Der derart sensitiven Mehrfarben-Kamera ist eine Filtereinrichtung vorgeschaltet, welche als Mehrfachbanden-Filter, insbesondere als Dreifachbanden-Filter bzw. so genannter Trippelfilter gestaltet ist. Die derartige Filtereinrichtung weist drei jeweils beschränkte Transmissionsbereiche auf. Ein erster Transmissionsbereich beschränkt sich mit einer möglichst hohen relativen Transmission (idealerweise etwa 1) auf einen Wellenlängenbereich zwischen ca. 430 nm und ca. 450 nm. Ein zweiter Transmissionsbereich beschränkt sich mit einer möglichst hohen relativen Transmission (idealerweise etwa 1) auf den Wellenlängenabschnitt zwischen ca. 520 nm und ca. 540 nm. Der dritte Transmissionsbereich umfasst schließlich mit einer möglichst hohen relativen Transmission (idealerweise etwa 1) lediglich den Wellenlängenbereich zwischen ca. 620 nm und ca. 640 nm.

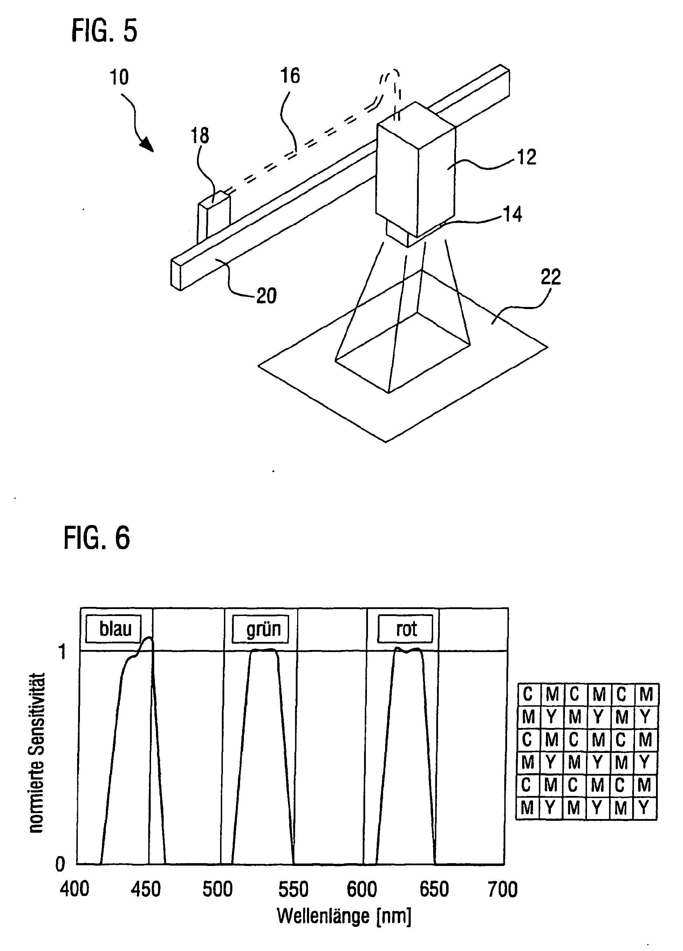

Das derart gestaltete Farbdichtemessgerät 10 ist in Fig. 5 mit seiner als Mehrfarben-Bildsensor wirkenden Kamera 12 sowie dem als Filtereinrichtung wirkenden, vorgeschalteten Trippelfilter 14 nochmals veranschaulicht.

Das Farbdichtemessgerät 10 wird im Betrieb beispielsweise innerhalb einer weiter nicht dargestellten Druckvorrichtung für Mehrfarbendruck auf einen mit einer Farbschicht versehenen und daher bunten Bedruckstoff 22 gerichtet.

Das Farbdichtemessgerät 10 ist ferner über Leitungen 16 mit einer Steuer- und Auswerteschaltung 18 betrieblich gekoppelt. Ferner ist das Farbdichtemessgerät 10 an einer Traverse 20 motorisch verschiebbar gelagert.

Mit der derart angeordneten Mehrfarben-Kamera 12 werden dann nicht etwa herkömmliche Farbaufnahmen gemacht, sondern es werden Farbdichtemessungen durchgeführt, welche zumindest die gleiche Messqualität aufweisen, wie Messungen mit herkömmlichen Densitometern.

Solche Farbdichtemessungen sind möglich, weil durch die erfindungsgemäße Kombination des Dreifachbanden-Filters 14 (siehe Fig. 4) mit einer Mehrfarben-Kamera 12 (siehe Fig. 3) sich über den gesamten Wellenlängenbereich hinweg eine besondere normierte Sensitivität der einzelnen Pixel der Mehrfarben-Kamera 12 ergibt (siehe linker Bereich der Fig. 6). So verbleibt für den blauen Pixel eine hohe normierte Sensitivität lediglich im Wellenlängenbereich zwischen ca. 430 nm und ca. 450 nm. Für den grünen Pixel ist eine hohe normierte Sensitivität auf den Wellenlängenbereich zwischen ca. 520 nm und 540 nm beschränkt. Der rote Pixel ist nur im Wellenlängenbereich zwischen ca. 620 nm und ca. 640 nm besonders sensitiv.

Überdeckt man diese sich ergebende Sensitivität der mit dem Dreifachbanden-Filter 14 versehenen Mehrfarben-Kamera 12 (siehe linker Bereich der Fig. 6) mit spektralen Remissionskurven der Buntfarben Cyan, Magenta und Yellow sowie des unbedruckten weißen Papiers (siehe Fig. 2), so ist zu erkennen, dass mit dem gefilterten "roten" Pixel ein Densitometer für Cyan (C) (vergleiche auch Fig. 1), mit dem "grünen" Pixel ein Densitometer für Magenta (M) und mit dem "blauen" Pixel ein Densitometer für Yellow (Y) geschaffen worden ist. Diese Funktionalität der erfindungsgemäß eingesetzten Mehrfarben-Kamera 12 ist im rechten Bereich der Fig. 6 mit entsprechend bezeichneten Sensorpunkten nochmals veranschaulicht (siehe insbesondere im Vergleich zum rechten Bereich der Fig. 3).

Es ist demnach mit dem Farbdichtemessgerät 10 möglich, in nur einer einzigen Aufnahme insgesamt drei Dichtemessungen vorzunehmen und ferner gegebenenfalls einen Vergleich mit einer unbedruckten weißen Papieroberfläche durchzuführen.

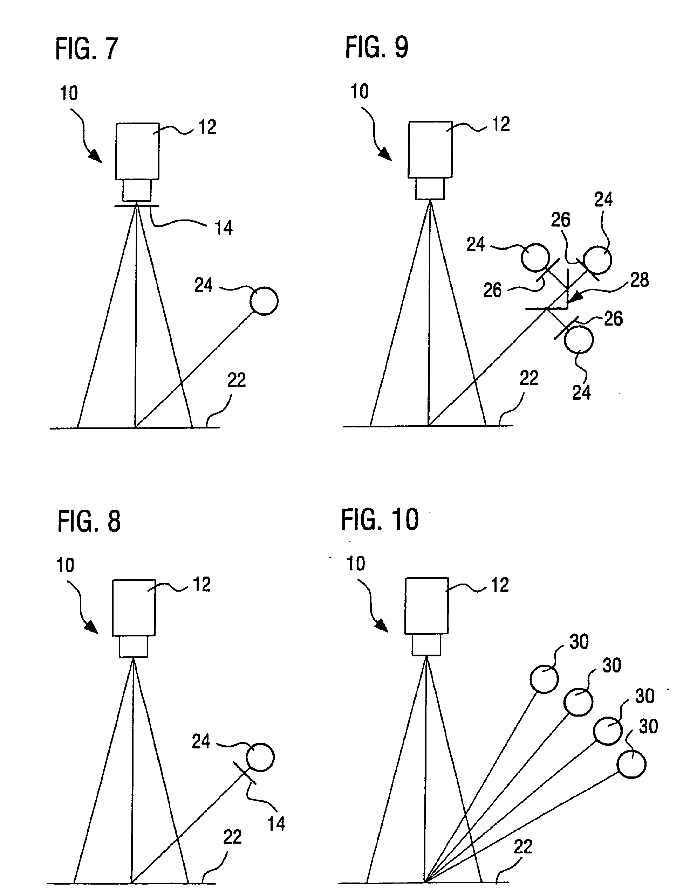

In Fig. 7 ist ein zweites Ausführungsbeispiel eines Farbdichtemessgeräts 10 veranschaulicht, welches hinsichtlich der Mehrfarben-Kamera 12, dem Dreifachbanden-Filter 14 und dem Bedruckstoff 22 wie das in Fig. 5 veranschaulichte Beispiel gestaltet ist. Bei dem Ausführungsbeispiel gemäß Fig. 7 ist die Mehrfarben-Kamera 12 jedoch nicht verfahrbar sondern ortsfest an einem (nicht dargestellten) Stativ befestigt. An dem Farbdichtemessgerät 10 gemäß Fig. 7 ist ferner eine Lichtquelle 24 in Form einer über das gesamte sichtbare Wellenlängenspektrum Licht aussendenden Leuchte vorgesehen. Diese Leuchte ist in einem Haupteinstrahlwinkel von zirka 45° zur Ebene des Bedruckstoffs 22 angeordnet. Der Dreifachbanden-Filter 14 ist bei dem Ausführungsbeispiel gemäß Fig. 7 ebenfalls unmittelbar vor einem Objektiv der Mehrfarben-Kamera 12 in den Strahlengang des vom Bedruckstoff 22 remittierten Lichts geschaltet.

Fig. 8 zweigt ein Ausführungsbeispiel eines Farbdichtemessgeräts 10 bei dem der Dreifachbanden-Filter 14 nicht vor die Mehrfarben-Kamera 12 sondern unmittelbar hinter die Lichtquelle 24 in den Strahlengang des von der Lichtquelle 24 gesendeten Lichts geschaltet ist. Eine derartige Anordnung des Dreifachbanden-Filters 14 beschränkt bereits das auf den Bedruckstoff 22 gerichtete Licht auf die gewünschten oben genannten Wellenlängenbänder.

In Fig. 9 ist ein Ausführungsbeispiel veranschaulicht, bei dem an Stelle einer einzelnen Lichtquelle 24 und eines Dreifachbanden-Filters 14 insgesamt drei Lichtquellen 24 vorgesehen sind, denen jeweils ein Einfachbanden-Filter 26 vorgeschaltet ist. Den derartigen Beleuchtungen ist ferner ein Lichtmischsystem 28 in Form von Farbinterferenzfiltern zugeordnet, mittels dem die Strahlengänge der drei Lichtquellen 24 zu einem Strahlengang vereint sind.

Die Fig. 10 stellt schließlich ein Ausführungsbeispiel dar, bei dem insgesamt vier Lichtquellen 30 vorgesehen sind. Diese Lichtquellen 30 sind nebeneinander angeordnet und jeweils einzeln auf den Bedruckstoff 22 gerichtet, wobei wiederum (im Gegensatz zu der nur schematischen Dargstellung) jeweils ein Haupteinstrahlwinkel von zirka 45° zur Ebene des Bedruckstoffs eingehalten ist. Von diesen vier Lichtquellen 30 sind drei als Leuchtdioden bzw. Laserleuchten mit speziellen erfindungsgemäß beschränkten Wellenlängespektren im Bereich des blauen, grünen und roten Lichts gestaltet. Die vierte Lichtquelle 30 ist eine Infrarotlichtleuchte mit ebenfalls beschränktem Wellenländenband. Mit dieser Lichtquelle 30 aus dem infraroten Bereich ist dann, wie oben erläutert, im Zusammenwirken mit der Mehrfarben-Kamera 12 eine Dichtemessung der Druckfarbe schwarz möglich.

### Bezugszeichenliste

- 10: Farbdichtemessgerät
- 12: Mehrfarben-Kamera
- 14: Dreifachbanden-Filter
- 16: Leitung
- 18: Steuer- und Auswerteschaltung
- 20: Tranverse
- 22: Bedruckstoff
- 24: Lichtquelle mit üblichem Wellenlängenspektrum
- 26: Einfachbanden-Filter
- 28: Lichtmischsystem
- 30: Lichtquelle mit speziell beschränkten Wellenlängenband

## Patentansprüche

1. Farbdichtemessgerät (10) zum Bestimmen der Farbdichte von auf einem Bedruckstoff (22) aufgebrachten Farbschichten, mit einer Lichtquelle (24) mit einer Filtereinrichtung (14) oder einer Mehrzahl an Lichtquellen (24, 26, 30) zum Beleuchten des Bedruckstoffes (22) und einem Sensor zum Empfangen des vom Bedruckstoff (22) remittierten Lichts, wobei der Sensor als ein Mehrfarben-Bildsensor (12) gestaltet ist, der mit einer Mehrfarben-Kamera gebildet ist, welche auf einem flächigen Bildsensor eine Vielzahl Sensorpunkte mit unterschiedlichen spektralen Sensitivitäten für Farben Rot, Grün und Blau aufweist, und wobei die eine Filtereinrichtung (14) ein Mehrfachbandfilter ist, der oder die Mehrzahl an den Lichtquellen (24, 26, 30) derart eingerichtet ist, dass auf den Mehrfarben-Bildsensor (12) Licht trifft, das auf Wellenlängenbänder beschränkt ist, die auf einen Bereich zwischen 610 nm und 650 nm und auf einen Bereich zwischen 510 nm und 550 nm und auf einen Bereich zwischen 420 nm und 460 nm beschränkt sind, so dass mit einer einzigen bildhaften Aufnahme der Mehrfarben-Kamera mit dem Farbdichtemessgerät (10) Farbdichten von Cyan, Magenta und Yellow messbar sind, wobei die Mehrfarben-Kamera eingerichtet ist, dass die Messungen der Farbdichten von Cyan, Magenta und Yellow zeitgleich durchführbar sind.

2. Farbdichtemessgerät nach Anspruch 1, wobei jede der Lichtquellen (30) der Mehrzahl an den Lichtquellen (30) Licht emittiert, das auf jeweils eines der Wellenlängenbänder beschränkt ist.

3. Farbdichtemessgerät nach Anspruch 1, wobei die Filtereinrichtung (14) der Lichtquelle (24) nachgeschaltet oder dem Mehrfarben-Bildsensor (12) vorgeschaltet ist.

4. Farbdichtemessgerät nach einem der Ansprüche 1 bis 3,
wobei mehrere Lichtquellen (24) bevorzugt mit jeweils einer zugehörigen nachgeschalteten Filtereinrichtung (26) vorgesehen sind.

5. Farbdichtemessgerät nach einem der Ansprüche 1 bis 4, wobei das Wellenlängenspektrum des auf den Mehrfarben-Bildsensor (12) auftreffenden Lichts auf einen Teilbereich zwischen 520 nm und 540 nm, und zwischen 430 nm und 450 nm, und auf einen Teilbereich zwischen 620 nm und 640 nm, beschränkt ist.

6. Verwendung eines Farbdichtemessgeräts (10) nach einem der Ansprüche 1 bis 5 an einer Druckvorrichtung für Mehrfarbendruck.

7. Verfahren zum Bestimmen der Farbdichte mindestens einer der Farben Cyan, Magenta oder Yellow an einem farbigen Stoff (22), mit den Schritten:
Bereitstellen eines Farbdichtemeßgeräts (10) gemäß einem der Ansprüche 1 bis 5,
Beleuchten des Stoffes mit der Lichtquelle (24) oder der Mehrzahl an den Lichtquellen (24, 26, 30),
Herstellen einer bildhaften Aufnahme des vom Stoff (22) remittierten Lichts mit dem Mehrfarben-Bildsensor (12),
Beschränken des an dem Mehrfarben-Bildsensor (22) eintreffenden Lichts auf die vorherbestimmten Welllängenbänder mit der Filtereinrichtung (14) oder der Mehrzahl an den Lichtquellen (24, 26, 30) und
Auswerten der mit dem Mehrfarben-Bildsensor (12) erstellten bildhaften Aufnahme unter Berücksichtigung der ermittelten Lichtintensität an den Sensorpunkten des Mehrfarben-Bildsensors (12), wobei mit den Sensorpunkten für die Farbe Rot die Farbdichte von Cyan, mit den Sensorpunkten für die Farbe Grün die Farbdichte von Magenta und mit den Sensorpunkten für die Farbe Blau die Farbdichte von Yellow gemessen wird.

8. Verfahren nach Anspruch 7, mit dem Schritt: Herstellen der bildhaften Aufnahme an einem Bildbereich des Stoffes (22), in dem sich sowohl ein farbiger, als auch ein weißer Bildabschnitt befinden.

## Claims

1. Colour density measuring device (10) for determining the colour density of colour layers deposited on a print substrate (22), with a light source (24) with a filter device (14) or a plurality of light sources (24, 26, 30) for irradiating the print substrate (22) and a sensor for receiving the light remitted from the print substrate (22), wherein the sensor is formed as a multiple colour image sensor (12), which is formed with a multiple colour camera, which comprises a plurality of sensor points with different spectral sensitvities for colours red, green and blue on a surface image sensor, and wherein the filter device (14) is a multiple band filter, which or the plurality of the light sources (24, 26, 30) is adapted such that light reaches the multiple colour image sensor, wherein the light is restricted to wavelength bands which are restricted to a range between 610 nm and 650 nm and to a range between 510 nm and 550 nm and to a range between 420 nm and 460 nm, so that colour densities of cyan, magenta and yellow can be measured with the colour density measuring device (10) with a single pictorial recording of the multiple colour camera, wherein the multiple colour camera is adapted such that the measurements of the colour densities of cyan, magenta and yellow can be performed simultaneously.

2. Colour density measuring device according to claim 1, wherein each of the light sources (30) of the plurality of the light sources (30) emits light, which is restricted to one of the wavelength bands.

3. Colour density measuring device according to claim 1, wherein the filter device (14) is arranged downstream of the light source (24) or upstream of the multiple colour image sensor (12).

4. Colour density measuring device according to anyone of claims 1 to 3, wherein multiple light sources (24) are preferentially provided each with an associated downstream filter device (26).

5. Colour density measuring device according to anyone of claims 1 to 4, wherein the wavelength spectrum of the light reaching the multiple colour image sensor (12) is restricted to a partial range between 520 nm and 540 nm, and between 430 nm and 450 nm, and to a partial range between 620 nm und 640 nm.

6. Use of a colour density measuring device (10) according to anyone of claims 1 to 5 at a printing device for multiple colour printing.

7. Method for determining the colour density of at least one of the colours cyan, magenta or yellow on a coloured substrate (22), with the steps:
Providing a colour density measuring device (10) according to anyone of claims 1 to 5,
Irradiating the substrate with the light source (24) or the plurality of the light sources (24, 26, 30),
Making a pictorial recording of the light remitted from the material (22) with the multiple colour image sensor (12),
Restricting the light reaching the multiple colour image sensor (22) to the predetermined wavelength bands with the filter device (14) or the plurality of the light sources (24, 26, 30), and
Processing of the pictorial recording made with the multiple colour image sensor (12) taking into account the determined light intensities at the sensor points of the multiple colour image sensor (12), wherein with the sensor points for the colour red the colour density of cyan, with the sensor points for the colour green the colour density of magenta and with the sensor points for the colour blue the colour density of yellow is measured.

8. Method according to claim 7 comprising the step: Making a pictorial recording of an image section of the material (22), in which a coloured as well as a white section are located.

## Revendications

1. Appareil de mesure de la densité de couleur (10) permettant de mesure la densité de couleur de couches de couleurs appliquées sur une matière support (22), avec une source de lumière (24) avec un dispositif de filtrage (14) ou une pluralité de sources de lumière (24, 26, 30) permettant d'éclairer le support (22) et un capteur permettant de recevoir la lumière réémise par le support (22), moyennant quoi le capteur est conçu comme un capteur d'image couleur (12) disposé sur une caméra couleur, qui comporte, sur un capteur d'image plat, une pluralité de points de capteurs avec différentes sensibilités spectrales pour les couleurs rouge, verte et bleue, et moyennant quoi le dispositif de filtrage (14) est un filtre à bandes multiples, ce filtre ou la pluralité de sources de lumière (24, 26, 30) étant conçus de telle sorte que la lumière qui arrive sur le capteur d'image couleur (12) soit limitée à des bandes de longueurs d'ondes limitées à un domaine entre 610 nm et 650 nm et à un domaine entre 510 nm et 550 nm et à un domaine entre 420 nm et 460 nm, de façon à ce que, avec une seule prise de vue de la caméra couleur avec l'appareil de mesure de la densité de couleur (10), les densités de couleurs cyan, magenta et jaune soient mesurables, moyennant quoi la caméra couleur est conçue de façon à ce que les mesures des densités de couleurs cyan, magenta et jaune puissent être effectuées simultanément.

2. Appareil de mesure de la densité de couleur selon la revendication 1, moyennant quoi chacune des sources de lumière (30) de la pluralité de sources de lumière (30) émet de la lumière limitée chacune à une des bandes de longueurs d'ondes.

3. Appareil de mesure de la densité de couleur selon la revendication 1, moyennant quoi le dispositif de filtrage (14) est branché en aval de la source de lumière (24) ou en amont du capteur d'image couleur (12).

4. Appareil de mesure de la densité de couleur selon l'une des revendications 1 à 3, moyennant quoi plusieurs sources de lumière (24) sont de préférence équipées d'un dispositif de filtrage (26) correspondant branché en aval.

5. Appareil de mesure de la densité de couleur selon l'une des revendications 1 à 4, moyennant quoi le spectre de longueurs d'ondes de la lumière arrivant sur le capteur d'image couleur (12) est limité à un domaine partiel entre 520 nm et 540 nm et entre 430 nm et 450 nm et à un domaine partiel entre 620 nm et 640 nm.

6. Utilisation d'un appareil de mesure de la densité de couleur (10) selon l'une des revendications 1 à 5 sur un dispositif d'impression pour impression couleur.

7. Procédé de détermination de la densité de couleur d'au moins une des couleurs cyan, magenta ou jaune sur une matière colorée (22), comportant les étapes suivantes :
Préparation d'un appareil de mesure de la densité de couleur (10) selon l'une des revendications 1 à 5,
Eclairage de la matière avec la source de lumière (24) ou la pluralité de sources de lumière (24, 26, 30),
Réalisation d'une prise de vue de la lumière réémise par la matière (22) avec le capteur d'image couleur (12),
Limitation de la lumière arrivant sur le capteur d'image couleur (22) aux bandes de longueurs d'ondes prédéterminée avec le dispositif de filtrage (14) ou la pluralité de sources de lumière (24, 26, 30) et
Analyse de la prise de vue réalisée avec le capteur d'image couleur (12) en tenant compte de l'intensité lumineuse émise au niveau des points de capteurs du capteur d'image couleur (12), moyennant quoi, avec les points de capteurs pour la couleur rouge, la densité de couleur du cyan est mesurée, avec les points de capteurs pour la couleur verte, la densité de couleur du magenta est mesurée et avec les points de capteurs pour la couleur bleue, la densité de couleur du jaune est mesurée.

8. Procédé selon la revendication 7, avec l'étape suivante : réalisation de la prise de vue sur une zone de la matière support (22), dans laquelle se trouvent une partie d'image colorée ainsi qu'une partie d'image blanche.
